# DEMANDE DE BREVET EUROPEEN

(11) **EP 4 606 682 A1**
(43) Date de publication de la demande: **27.08.2025**
(21) Numéro de dépôt: 25157790.4
(22) Date de dépôt: 13.02.2025
(51) Int. Cl.: B62D 35/00, B60J 5/10, B62D 37/02

(54) **HAYON DESTINÉ À ÊTRE INTÉGRÉ À UNE CARROSSERIE D'UN VÉHICULE AUTOMOBILE**

(30) Priorité: 22.02.2024 FR 2401730
(71) Demandeur: Renault s.a.s, 92100 Boulogne Billancourt (FR)
(72) Inventeur: MULATO, Gilles, 78280 GUYANCOURT (FR)

(57) **Abrégé**

Hayon (1) destiné à être intégré à une carrosserie (3) d'un véhicule automobile, ledit hayon (1) présentant une bordure supérieure reliée à la carrosserie (3) et une bordure inférieure (7) opposée à ladite bordure supérieure, ladite bordure inférieure (7) comprenant une partie fixe (9) par rapport au hayon (1) et une partie mobile (11) solidaire de la partie fixe (9), ladite partie mobile (11) définissant un bord de fuite (13),
caractérisé en ce que la partie mobile (11) est montée mobile en mouvement par rapport à la partie fixe (9) entre une position rétractée dans laquelle le bord de fuite (13) est rapproché de la partie fixe (9) et une position déployée dans laquelle le bord de fuite (13) est écarté et abaissé par rapport à la partie fixe (9) par quoi le hayon (1) est allongé.

## Description

L'invention concerne un hayon destiné à être intégré à une carrosserie d'un véhicule automobile.

L'aérodynamisme d'une voiture est, avec le moteur, un des aspects techniques le plus important d'un véhicule puisqu'il permet de réduire sa consommation en carburant ou en énergie électrique.

Or, avec la vitesse, non seulement la résistance de l'air s'oppose au déplacement du véhicule, mais aussi les écoulements d'air sous la voiture tendent à la soulever ou à créer des turbulences.

Il est donc connu d'utiliser des déflecteurs aérodynamiques pour augmenter l'appui aérodynamique sur les roues, en modifiant de manière adéquate la direction de l'écoulement de l'air au niveau de la partie arrière du véhicule. L'adhérence se voit alors grandement améliorée, et ce d'autant plus que la vitesse du véhicule est élevée.

Dans ce domaine technique, il existe notamment des déflecteurs aérodynamiques dits mobiles. Comme leur nom l'indique, ces dispositifs comportent un élément mobile, formant un déflecteur, qui est susceptible d'être déployé et/ou d'être orienté en fonction de la vitesse du véhicule. Ces éléments présentent notamment un bord de fuite correspondant à la partie arrière au sens de l'écoulement permettant de réduire la trainée aérodynamique.

Pour les véhicules ayant une carrosserie profilée, la bordure inférieure du hayon forme un déflecteur. Elle comprend alors une partie fixe et une partie mobile présentant le bord de fuite.

La partie mobile peut alors être entraînée en mouvement dans une position déployée dans laquelle elle est surélevée et donc le bord de fuite également. De la sorte, la pression sur la partie arrière du véhicule augmente et décolle le flux d'air. La tenue route est ainsi améliorée. Cependant, la structure proposée permet uniquement d'améliorer la tenue de route du véhicule. Elle ne permet pas de diminuer le coefficient de pénétration dans l'air, si on ne fait pas varier l'angle et la hauteur du bord de fuite.

Il existe donc un besoin pour une structure de hayon permettant d'améliorer la tenue de route du véhicule tout en améliorant le coefficient de pénétration dans l'air.

A cet effet, il est proposé un hayon destiné à être intégré à une carrosserie d'un véhicule automobile, ledit hayon présentant une bordure supérieure reliée à la carrosserie et une bordure inférieure opposée à ladite bordure supérieure, ladite bordure inférieure comprenant une partie fixe par rapport au hayon et une partie mobile solidaire de la partie fixe, ladite partie mobile définissant un bord de fuite. La partie mobile est montée mobile en mouvement par rapport à la partie fixe entre une position rétractée dans laquelle le bord de fuite est rapproché de la partie fixe et une position déployée dans laquelle le bord de fuite est écarté et abaissé par rapport à la partie fixe par quoi le hayon est allongé.

Ainsi une caractéristique de l'invention réside dans l'installation d'une partie mobile sur la bordure inférieure du hayon, permettant d'entraîner en mouvement le bord de fuite du véhicule. Elle va ainsi permettre d'entraîner en mouvement le bord de fuite vers une position écartée et abaissée ou relevée par rapport à sa position initiale.

L'objet de l'invention permet ainsi de réduire la traînée aérodynamique et par conséquent d'améliorer la pénétration dans l'air sans augmenter la longueur de la voiture tout en améliorant la tenue de route.

Préférentiellement, le hayon comprend un dispositif de déploiement apte à entraîner en mouvement la partie mobile entre la position rétractée et la position déployée selon une trajectoire courbe.

Le dispositif de déploiement permet ainsi d'entraîner en mouvement la partie mobile soit partiellement soit complètement en position déployée.

Le dispositif de déploiement peut également entraîner en mouvement la partie mobile lorsque le véhicule atteint une certaine vitesse, par exemple, la partie mobile peut être entraînée en position déployée complètement lorsque le véhicule atteint 80 km/h. Avantageusement, le dispositif de déploiement comprend une crémaillère courbe intérieure solidaire de la partie mobile, ladite crémaillère étant apte à entraîner la partie mobile selon la trajectoire courbe.

L'utilisation d'une crémaillère courbe permet d'effectuer une trajectoire courbe. En effet, la crémaillère courbe est reliée à la partie mobile de sorte à guider la partie mobile pour l'écarter et l'abaisser par rapport à la partie fixe.

Préférentiellement, le dispositif de déploiement comprend, en outre, une roue dentée entraînée par un moteur, ladite roue dentée engrenant la crémaillère.

L'utilisation d'un moteur permet de commander automatiquement le déploiement de la partie mobile.

Préférentiellement, le hayon comprend au moins deux dispositif de déploiement.

La partie fixe et la partie mobile s'étendent selon une direction transversale. Les deux dispositifs de déploiement sont installés aux extrémités de la partie fixe selon la direction transversale permettant un meilleur maintien de la partie mobile lors de son déploiement. Avantageusement, la partie mobile est montée pivotante sur la crémaillère courbe. Cela offre la possibilité de faire pivoter la partie mobile par rapport à la crémaillère lors du déploiement de la partie mobile.

Préférentiellement, chaque dispositif de déploiement comprend une bielle reliée respectivement à la partie fixe et à la partie mobile, ladite bielle étant apte à maintenir l'orientation de la partie mobile selon un plan sensiblement horizontal entre la position rétractée et la position déployée.

La partie mobile s'étend selon un plan sensiblement horizontal. La bielle est, en outre, apte à maintenir l'orientation de la partie mobile selon un plan sensiblement horizontal lorsqu'elle est en position rétractée ou en position déployée.

Préférentiellement, la bielle présente une première extrémité montée mobile en rotation sur la partie mobile et une deuxième extrémité montée mobile en rotation et en translation sur la partie fixe.

Le déplacement de la bielle permet ainsi de maintenir l'orientation de la partie mobile dans un plan sensiblement horizontal tel que cela sera expliqué plus en détail dans la suite de la description. De plus l'ajustement en longueur de cette bielle pourra permettre d'optimiser la performance du système.

Avantageusement, la deuxième extrémité est retenue par un organe élastique sur la partie fixe.

L'utilisation d'un organe élastique permet de maintenir la bielle à la partie fixe sous tension comme on l'expliquera ci-après. De la sorte la bielle permet de maintenir la partie mobile dans un plan sensiblement horizontal.

L'invention concerne également un véhicule automobile comprenant le hayon tel que décrit précédemment.

L'objet de l'invention peut ainsi être installé sur des véhicules automobiles comprenant un hayon tel que présent sur les véhicules type berlines ou une malle telle que présente sur les véhicules de type limousines.

D'autres particularités et avantages de l'invention ressortiront à la lecture de la description faite ci-après de plusieurs modes de réalisation particulier de l'invention, donnés à titre indicatif mais non limitatif, en référence aux dessins annexés sur lesquels :
[Fig. 1] est une vue schématique en perspective arrière d'un hayon d'un véhicule automobile selon l'invention.
[Fig. 2] est une vue schématique en perspective de détail d'une partie d'un hayon d'un véhicule automobile selon l'invention.
[Fig. 3a] est une vue schématique de côté d'une partie d'un hayon selon un premier mode de réalisation de l'invention dans une première position.
[Fig. 3b] est une vue schématique de côté d'une partie d'un hayon selon un premier mode de réalisation de l'invention dans une deuxième position.
[Fig. 4] est une vue schématique en coupe de détail d'une partie d'un hayon en position déployée selon un premier mode de réalisation de l'invention.
[Fig. 5a] est une vue schématique de côté d'une partie d'un hayon selon le deuxième mode de réalisation de l'invention dans une première position.
[Fig. 5b] est une vue schématique de côté d'une partie d'un hayon selon le deuxième mode de réalisation de l'invention dans une deuxième position.
[Fig. 5c] est une vue schématique de côté d'une partie d'un hayon selon le deuxième mode de réalisation de l'invention dans une troisième position.

Sur les figures, au regard du repère (X Y, Z), le véhicule automobile s'étend longitudinalement de l'avant vers l'arrière selon l'axe X, transversalement de la gauche vers la droite en situation de conduite, selon l'axe Y et verticalement à l'opposé de la surface d'appui selon l'axe Z.

L'invention concerne un hayon destiné à être intégré à une carrosserie d'un véhicule automobile.

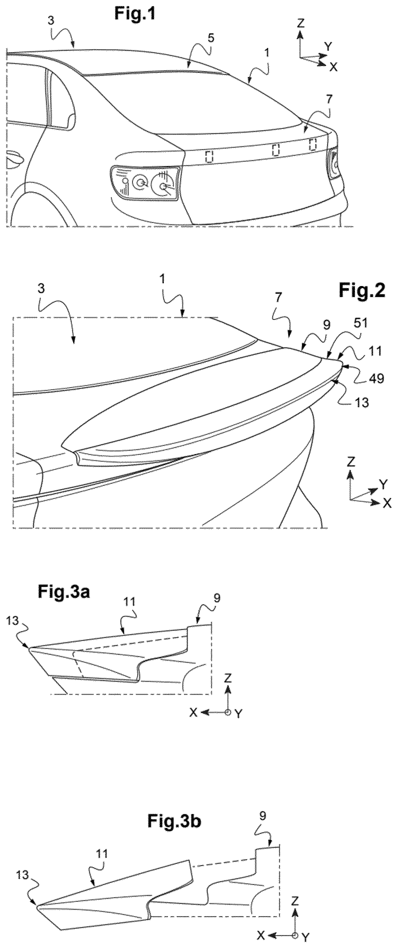

La [Fig. 1] illustre un hayon 1 installé dans la carrosserie 3 du véhicule automobile.

Le hayon 1 présente une bordure supérieure 5 reliée à la carrosserie 3 ainsi qu'une bordure inférieure 7. La bordure supérieure 5 est montée à rotation sur la carrosserie 3 par des moyens de rotation tel que des charnières (non représentées sur les figures).

En référence à la [Fig. 2], la bordure inférieure 7 du hayon 1 présente une partie fixe 9 par rapport au hayon 1 et une partie mobile 11 solidaire de la partie fixe 9.

La partie mobile 11 présente une partie avant 49 éloignée de la partie fixe 9 ainsi qu'une partie arrière 51 proche de la partie fixe. La partie mobile 11 définit également un bord de fuite 13 du véhicule proche de la partie avant 49.

La partie mobile 11 est montée mobile en mouvement par rapport à la partie fixe 9 entre une position rétractée et une position déployée.

On se référera, à présent, aux [Fig. 3a] et [Fig. 3b] qui illustrent la partie mobile 11 en position rétractée et déployée.

En position rétractée, le bord de fuite 13, tel qu'illustré sur la [Fig. 3a], est rapproché de la partie fixe 9. Dans ce cas, la partie mobile 11 est encastré dans le hayon 1 et ne forme qu'un avec lui.

En position déployée, le bord de fuite 13 tel qu'illustré sur la [Fig. 3b] est écarté et abaissé par rapport à la partie fixe 9. Le bord de fuite 13 est écarté selon l'axe longitudinal X de sorte que le hayon est allongé et il est abaissé vers le bas selon l'axe vertical Z. De la sorte, la trainée aérodynamique est diminuée et le coefficient de pénétration dans l'air est amélioré. Le bord de fuite 13 peut alors être écarté d'au minimum 50 millimètres selon l'axe longitudinal X par rapport à la partie fixe 9 et être abaissé d'au moins 50 millimètres par rapport à la partie fixe 9 selon l'axe vertical Z.

La partie mobile 11 peut également être entraînée en mouvement et maintenue dans des positions intermédiaires entre la position rétractée et la position déployée.

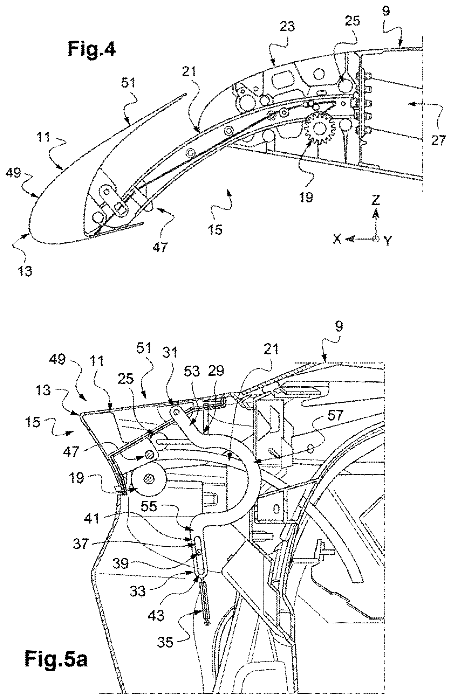

En référence à la [Fig. 4], la partie mobile 11 est entraînée en mouvement par un dispositif de déploiement 15 selon une trajectoire courbe.

L'invention n'est pas limitée à un seul dispositif de déploiement 15. En effet, suivant la taille, la forme et le poids de la partie mobile 11, un ou plusieurs dispositifs de déploiement 15 peuvent être utilisés pour entraîner en mouvement la partie mobile 11.

De préférence, le hayon 1 présente deux dispositifs de déploiement 15. Les deux dispositifs de déploiement sont installés aux extrémités de la partie mobile selon la direction transversale permettant un meilleur maintien de la partie mobile notamment lors de son déploiement. Le dispositif de déploiement 15 comprend un moteur (non représenté sur les figures) entraînant une roue dentée 19. Le moteur et la roue dentée 19 sont installés au niveau de la partie fixe 9 de la bordure inférieure 7. La roue dentée 19 et le moteur sont reliés par au moins un axe de rotation (non représenté sur les figures) de sorte que le moteur entraîne la roue dentée 19.

Le moteur permet d'automatiser le dispositif de déploiement 15.

Il peut comprendre également un système de commande (non représenté sur les figures) permettant à l'utilisateur du véhicule de déclencher le déploiement partiel ou complet de la partie mobile 11 quand il le souhaite ou un système de commande permettant de déclencher le déploiement partiel ou complet de la partie mobile 11 lorsque le véhicule atteint une certaine vitesse.

Le dispositif de déploiement 15 n'est pas limité à un seul moteur, le nombre de moteurs nécessaires peut être adapté suivant la taille ou la forme de la partie mobile 11.

Le dispositif de déploiement 15 comprend, en outre, une crémaillère 21 courbe intérieure solidaire de la partie mobile 11 et engrené par la roue dentée.

La crémaillère courbe 21 s'étend selon un arc de cercle et présente un rayon de courbure compris entre 20 centimètres et 90 centimètres.

La crémaillère 21 présente une pluralité de dents (non représenté sur les figure) sur la partie concave. La pluralité de dents est engrenée par la roue dentée 19 pour entraîner en mouvement la crémaillère 21 et ainsi la partie mobile 11.

La crémaillère 21 est, en outre, maintenue en position par des galets de guidage 25. La partie concave et la partie convexe opposée sont en appuis contre les galets de guidage 25.

Le dispositif 15 présente trois galets de guidage et un galet d'entraînement. La partie concave est en appui sur deux galets de guidage tandis que la partie convexe est en appui sur un galet de guidage et un galet d'entraînement. Ils permettent ainsi de guider le mouvement de la crémaillère 21 selon le cercle qu'elle définit.

La crémaillère 21 présente une extrémité de liaison 47 reliée à la partie avant 49 de la partie mobile 11.

Lorsque la partie mobile 11 est en position rétractée, la crémaillère 21 est installée dans le hayon 1 au niveau d'une cavité 27.

Tel qu'illustré sur la [Fig. 4], le hayon 1 peut présenter un carénage 23 interne se prolongeant autour de la partie fixe 9 de sorte que lorsque la partie mobile 11 est déployée, le carénage 23 assure l'étanchéité et la fermeture du hayon 1.

Le hayon 1 peut également présenter des fixations (non représentées sur les figures) notamment au niveau de la bordure inférieure 7, préférentiellement au niveau du carénage 23. Les fixations permettent ainsi de pouvoir y fixer un porte-vélo ou encore une galerie de toit, une fois le système déployé et maintenu dans cette position par des moyens de blocage. Lorsque le système est replié, les fixations sont dissimulées.

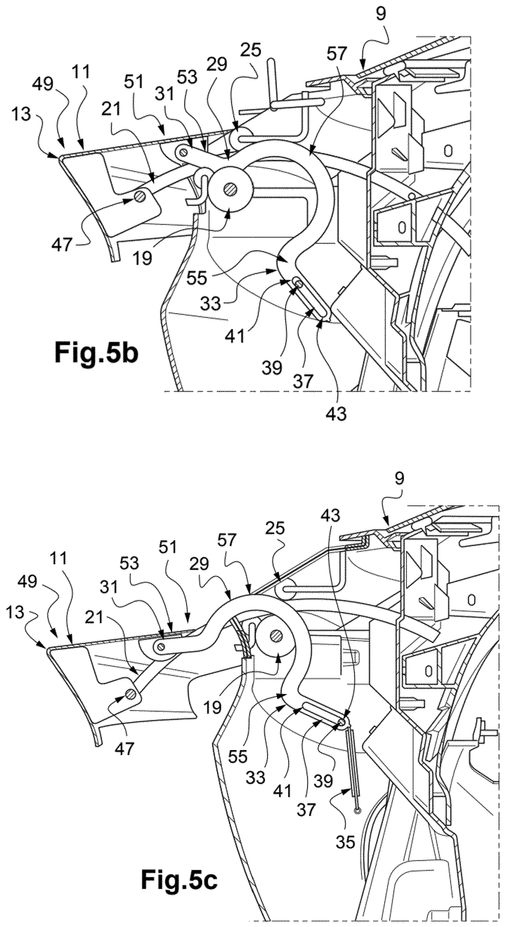

Les [Fig. 5a] à [Fig. 5c] présentent un deuxième mode de réalisation de l'invention. Dans ce mode de réalisation, la structure du hayon 1 et du dispositif de déploiement 15 est la même que dans le premier mode de réalisation.

Selon ce deuxième mode, la partie avant 49 de la partie mobile 11 est montée pivotante sur l'extrémité de liaison 47 de la crémaillère courbe 21.

Cela offre la possibilité à la partie mobile 11 de pivoter de manière verticale indépendamment du mouvement de déploiement de la partie mobile 11.

Pour maintenir l'orientation de la partie mobile 11 selon un plan sensiblement horizontal lors de son déploiement, le dispositif de déploiement 15 comprend, en outre, une bielle 29.

La bielle 29 comprend respectivement deux bras, un premier 53 et un second 55 s'étendant dans des directions sensiblement opposés et réunit ensemble par une partie en C 57.

La bielle 29 présente, en outre, une première extrémité 31 au niveau du premier bras 53 et une deuxième extrémité 33 au niveau du second bras 55.

La forme de la bielle 29 est choisie de sorte qu'elle contourne les autres éléments du dispositif de déploiement 15 et notamment l'arbre reliant les dispositifs entre eux (non représenté sur les figures).

Cependant la forme de la bielle 29 n'est pas limitée à la forme décrite ci-dessus.

La première extrémité 31 de la bielle 29 est reliée à la partie arrière 51 de la partie mobile 11.

Et la deuxième extrémité 33 de la bielle 29 est reliée à la partie fixe 9.

La deuxième extrémité 33 est retenue par un organe élastique 35 par exemple un ressort hélicoïdal sur la partie fixe 9. Plus précisément, la deuxième extrémité 33 présente, en outre, une lumière oblongue 37 dans laquelle vient s'étendre un doigt 39. Le doigt 39 est solidaire de la partie fixe 9.

La lumière oblongue 37 présente un bord d'arrêt proximal 41 proche de la partie en C 57, un bord d'arrêt distal 43 opposé au bord d'arrêt proximal 41 ainsi que deux bords de guidage parallèles opposés les reliant.

Lorsque la bielle est entraînée en mouvement entre deux positions extrêmes. Les deux bords de guidage viennent alors en appui glissant sur le doigt 39, le deuxième bras de la bielle est ainsi bloqué par les deux bords d'arrêt proximal 41 et distal 43.

La première extrémité 31 de la bielle 29 est montée mobile en rotation sur la partie arrière 51 de la partie mobile 11 tandis que la deuxième extrémité 33 est montée mobile en rotation et en translation sur le doigt 39.

Pour illustrer le mouvement, on se référera, à présent, aux [Fig. 5a], [Fig. 5b] et [Fig. 5c] qui illustrent la partie mobile 11 en position rétractée et déployée ainsi que dans une position intermédiaire.

Lorsque la partie mobile 11 est en position rétractée, la bielle 29 s'étend selon une composante verticale tandis que la bord d'arrêt proximal 41 se situe au voisinage du doigt 39, tel qu'illustré sur la [Fig. 5a].

Le galet d'entraînement entraîne la crémaillère courbe 21 suivant la trajectoire qu'elle définit. La crémaillère 21 entraîne alors en mouvement la partie avant 49 de la partie mobile 11 le long de son arc de cercle, la partie mobile 11 est alors écartée de la partie fixe 9.

Le mouvement de la partie mobile 11, provoque l'entraînement de la première extrémité 31 de la bielle 29 tandis que la deuxième extrémité de la bielle 29 est retenue vers le bas par l'organe élastique.

La bielle 29 exerce donc une force sur la partie arrière 51 de la partie mobile 11 permettant de maintenir son orientation selon un plan sensiblement horizontal tel qu'elle était lorsque la partie mobile 11 est en position rétractée.

La lumière oblongue 37 en combinaison avec le doigt 39 permet à la bielle de suivre le mouvement de la partie mobile 11 pour guider son déploiement entre la position rétractée et la position déployée.

La [Fig. 5c] illustre le dispositif de déploiement 15, lorsque la partie mobile 11 est en position déployée. La bielle 29 a alors pivoté d'un angle d'environ 45 degrés et elle est dans une position sensiblement horizontale selon l'axe longitudinal X tandis que le doigt 39 est en appui sur le bord d'arrêt distal 43. Cet angle de 45° est donné à titre d'exemple non limitatif et est bien entendu ajustable lors de la conception du système en fonction du déploiement souhaité.

Dans ce cas, la partie mobile 11 est maintenue dans un plan sensiblement horizontal en position déployée.

## Revendications

1. Hayon (1) destiné à être intégré à une carrosserie (3) d'un véhicule automobile,
ledit hayon (1) présentant une bordure supérieure (5) reliée à la carrosserie (3) et une bordure inférieure (7) opposée à ladite bordure supérieure (5), ladite bordure inférieure (7) comprenant une partie fixe (9) par rapport au hayon (1) et une partie mobile (11) solidaire de la partie fixe (9), ladite partie mobile (11) définissant un bord de fuite (13),
**caractérisé en ce que** la partie mobile (11) est montée mobile en mouvement par rapport à la partie fixe (9) entre une position rétractée dans laquelle le bord de fuite (13) est rapproché de la partie fixe (9) et une position déployée dans laquelle le bord de fuite (13) est écarté et abaissé par rapport à la partie fixe (9) par quoi le hayon (1) est allongé.

2. Hayon (1) selon la revendication 1, **caractérisé en ce que** le hayon (1) comprend un dispositif de déploiement (15) apte à entraîner en mouvement la partie mobile (11) entre la position rétractée et la position déployée selon une trajectoire courbe.

3. Hayon (1) selon la revendication 2, **caractérisé en ce que** le dispositif de déploiement (15) comprend une crémaillère (21) courbe intérieure solidaire de la partie mobile (11), ladite crémaillère (21) étant apte à entraîner la partie mobile (11) selon la trajectoire courbe.

4. Hayon (1) selon la revendication 3, **caractérisé en ce que** le dispositif de déploiement (15) comprend, en outre, une roue dentée (19) entraînée par un moteur, ladite roue dentée (19) engrenant la crémaillère (21).

5. Hayon (1) selon l'une quelconque des revendications 2 à 4, **caractérisé en ce que** le hayon (1) comprend au moins deux dispositif de déploiement (15).

6. Hayon (1) selon la revendication 3 et l'une des revendications 4 à 5, **caractérisé en ce que** la partie mobile (11) est montée pivotante sur la crémaillère courbe (21).

7. Hayon (1) selon l'une quelconque des revendications 2 à 6, **caractérisé en ce que** chaque dispositif de déploiement (15) comprend une bielle (29) reliée respectivement à la partie fixe (9) et à la partie mobile (11), ladite bielle (29) étant apte à maintenir l'orientation de la partie mobile (11) selon un plan sensiblement horizontal entre la position rétractée et la position déployée.

8. Hayon (1) selon la revendication 7 **caractérisée en ce que** la bielle (29) présente une première extrémité (31) montée mobile en rotation sur la partie mobile (11) et une deuxième extrémité (33) montée mobile en rotation et en translation sur la partie fixe (9).

9. Hayon (1) selon la revendication 8 **caractérisée en ce que** la deuxième extrémité (33) est retenue par un organe élastique (35) sur la partie fixe (9).

10. Véhicule automobile comprenant un hayon (1) selon l'une quelconque des revendications 1 à 9.
